# EUROPEAN PATENT APPLICATION

(11) **EP 4 431 257 A1**
(43) Date of publication of application: **18.09.2024**
(21) Application number: 24163687.7
(22) Date of filing: 14.03.2024
(51) Int. Cl.: B29C 41/00, B29C 41/06, F21V 15/01, F21V 21/10, F21V 31/00, F21V 21/116, F21W 131/10, F21Y 115/10

(54) **COVER FOR LED LIGHTING FIXTURE MADE OF POLYMER MATERIAL WITH HIGH MECHANICAL RESISTANCE AND LOW ENVIRONMENTAL IMPACT**

(30) Priority: 14.03.2023 IT 202300004749
(71) Applicant: Niteko S.r.l., 74020 Montemesola (TA) (IT)
(72) Inventor: DEODATI, Alessandro, 73049 Ruffano (LE) (IT); DE BERNARDO, Fabio, 74121 Taranto (IT)
(74) Representative: Karaghiosoff, Giorgio Alessandro

(57) **Abstract**

The invention has as its object a cover of an optical group obtained by rotational molding from a mixture of thermoplastic flakes and powder and the related manufacturing process, cover for a LED lighting fixture comprising an optical unit (2), said cover in which a coupling flange (38) is integrated, in which said optical unit (2) is removably fixed to the said coupling flange (38).

## Description

### BACKGROUND

The present invention concerns a LED lighting fixture with a frame made of polymeric material and a removable light source, characterized by high resistance to corrosion, high mechanical resistance, low specific weight and low environmental impact and more in particular it concerns the production process of the cover of the said appliance.

### STATE OF THE ART

An outdoor LED lighting fixture is mainly made up of:
- a supporting frame, which also defines the aesthetic shape of the appliance and includes the mechanical connections to the relevant supports;
- an optical unit, which may or may not be integrated with the supporting frame.

The optical group in turn includes:
a) a passive heat sink possibly including a plurality of fins - generally constituted, for example, by the frame of the lighting fixture itself or by an element independent of the supporting frame, conventionally made of aluminum alloy, subjected to anti-corrosion treatment and/or painting which is generally polyester powder;
b) a MCPCB substrate, i.e. Metal Core Printed Circuit Board, characterized by a main core made of aluminum or copper, metals with good thermal conductivity upon which the LEDs are soldered;
c) a possible arrangement for heat transfer between MCPCB and heat sink, such as a double-sided adhesive suitable for thermal transfer;
d) an optional system for directing the light, such as lenses and/or reflectors;
e) a mechanical protection system from water and dust, for example generally made up of a methacrylate or tempered glass screen, which is assembled on the heat sink using screws, preferably placing a suitable gasket between the latter;
f) a driver, such as an AC/DC converter, to electrically power the lighting fixture;
g) any remote or standalone electronic control devices connected to antennas that may be present on board the lighting fixture.

The optical unit, as mentioned, can be independent of the fixture frame or can be mechanically integrated with it and non-separable. In the first case, the optical unit, complete with electronic devices for the electrical power supply of the light source and for control, is fixed to the frame of the appliance preferably by means of a screwed connection and contained inside it. This is the case of lighting fixtures whose frame is made of turned aluminum or die-cast aluminum.

This configuration is also adopted by appliances whose frame is made of other types of material, even with low performance in terms of thermal conductivity, such as plastic ones.

The case, instead, that the optical unit is an integral part of the frame of the lighting fixture, is typical exclusively of lighting fixtures whose frame is made of die-cast aluminum and/or other thermally conductive material.

The advantage of this type of configuration is that, from the point of view of thermal dissipation, the thermal exchange of the heat generated by the light source is favored, first by conduction and then by convection, directly towards the environment outside the lamp. The advantage is that the volume of the device is not so strictly related to the thermal power to be dissipated and, therefore, with the same installed thermal power, it can be significantly smaller in size than in the case of the optical unit independent of the device frame.

At the state of the art, as mentioned, the materials used for the construction of the frames of the lighting fixtures are mainly aluminum or polymeric material.

The sustainability of materials such as aluminum, the most used in the manufacture of outdoor LED lamp frames is also influenced by their resistance to corrosion. This corrosion phenomenon is caused and/or triggered by the polluting agents and/or saline atmospheres characterizing the environment in which the lighting fixture is installed and occurs when paints or surface passivations are degraded due to aging due to exposure to sunlight and atmospheric agents. Being able to reduce the effects of corrosion on lighting fixtures, if not even eliminating the root causes, is essential both for economic savings for public administrations and for containing the environmental impact linked to the production cycle of the fixture itself.

Inherently, the life of an LED appliance is also influenced by its thermal management and therefore by the materials and design choices involved.

However, the use of aluminum as a construction material for frames entails the following advantages:
a) high thermal conductivity;
b) 100% recyclability of the material. The recovered aluminum is of identical quality to the original one;
c) high dimensional precision of the parts made by die-cast aluminum;
d) high dimensional stability.

In the hypothesis of instead using the polymer as a material for the manufacture of the frames of the lighting fixtures, in order to avoid the occurrence of the corrosion phenomenon, there are different molding methodologies. The main ones are injection molding, blow molding, thermoforming, extrusion and roto-molding. Due to the intrinsic limitations of other technologies, the state of the art includes mostly lighting fixtures made of plastic material, for functional outdoor use and/or street furniture, characterized by an external frame made using injection molding technology.

The advantages of using plastic combined with injection molding technology are:
1) prevention of the risk of electrocution in the event of electrical failure of the appliance itself as the material in contact with the outside is electrically insulating;
2) immunity to corrosion as the corrosion phenomenon is specific to metallic materials;
3) no need for the painting process or preparatory processes for painting;
4) transparency to radio waves and therefore the possibility of installing remote control devices including the relevant antennas inside the frame of the lighting fixture, with advantages from the final aesthetic point of view of the technical solution;
5) possibility of using 100% recyclable and/or plant-based materials;
6) economic advantage in recycling plastic materials compared to aluminum. Melting and remelting metals requires much more time and energy than recycling thermoplastic materials;
7) advantage in terms of finish compared to the uniform appearance characteristic of metals. Injection molded plastics can be produced with virtually any color or texture imaginable;
8) advantageous cost. In addition to reducing shipping and assembly costs, the manufacturing process for plastic parts is typically much cheaper than that for metal parts. Injection molding of plastics requires a much shorter cycle time than metalworking, making them generally easier and cheaper to process.
9) impact resistance without compromising the aesthetic appearance;
10) the possibility of tolerating greater elongations under load ranging between 1 - 4%, even if these levels can lead to non-linear deformations with the load and, therefore, possible geometric distortions of the piece.

The disadvantages of a device whose frame is made of polymeric material, made by plastic injection, are instead:
1) reduced durability compared to aluminum, especially when using recycled material. Contrary to what happens with metals, which retain their characteristics indefinitely regardless of the number of recycles, polymers undergo degradation processes both during processing and during their use. Heat, mechanical and electrical stress and ultraviolet radiation can profoundly change the structure, composition and morphology of the polymer, causing the splitting of the macromolecular chains and worsening almost all of its characteristics. Ultimately, with each processing operation in the molten state or with external use, the properties of the polymer decay. Since the secondary raw material, possibly used for the manufacture of the products, must be in the form of pellets or granules, it must therefore be transformed through a thermal-chemical process, and cannot be obtained by simple mechanical shredding of clean industrial waste or post-consumer.
   However, to maintain high mechanical properties, it is possible to mix recycled polymers with the same type of virgin polymers. The percentage of regenerated polymer is generally relatively low and does not exceed 25-30%. This means that already with the combination of mechanical recycling and the addition of a certain quantity of virgin polymers, it is possible to reduce the consumption of fossil plastics by 25%-30%;
2) the injection, due to the high flow speeds inside the mold, especially in the case of complex shapes and not high thicknesses, easily gives rise to highly tensioned products whose fibers are oriented. Sometimes the artefacts tend to deform over time, especially following even mild heating. This, together with the high cost of molding machinery and the need for continuous control over the process, is one of the major disadvantages of injection molding;
3) anisotropy determined by the flow of molten resin into the injection mold;
4) in a plastic frame, made using any technology, there is always the disadvantage of a possible formation of electrostatic charges which, if not appropriately dissipated, accumulating in a non-uniform manner on the surface of the appliance can lead to extremely high electrical discharges harmful to electronic components;
5) high number of molds for complex and/or undercut geometries;
6) high cost of molds;
7) production runs in the order of thousands of pieces, therefore the technology is not economically advantageous for small series and/or for the production of limited series;
8) high cost of assembling the individual details that make up the external supporting frame;
9) low wall thicknesses which favor the acceleration of the degradation phenomena of aging and consequent embrittlement of plastic products under the action of UV rays;
10) unacceptable stress concentrations may occur in mechanical connections and joints due to thermal expansion;
11) impossibility of directly using flakes of recycled material coming from the shredding and/or grinding process of primary or secondary mechanical recycling.

As mentioned, both the die-casting and plastic injection molding technologies require high investments in terms of molding equipment, against low costs of the molded parts: this implies that the use of these production technologies is justified only for batches of production in the order of thousands of pieces. This factor disadvantages all those projects, in the field of design applied to urban lighting, aimed at better characterizing the places, often of particular historical and/or architectural value, which are the subject of renovation work on public lighting systems. For this type of intervention, very often a limited number of pieces are required, in the order of tens or hundreds, and/or limited series of devices with large dimensions compared to that of the electronic devices contained therein.

A technology that is economically suitable for the production of small series of products and characterized by low environmental impact, but which due to intrinsic limitations has not taken ground in the manufacturing of functional outdoor lighting fixtures and/or powerful urban furnishings, is rotational molding. Rotational molding is a technological process that allows the production of hollow bodies in a single piece without the need for welding. This technology allows us to obtain pieces without internal tensions and with uniform thickness. Large items with very complicated contours can be printed in the most varied colors and materials. It is a technique typically used for the production of hollow bodies, even of considerable dimensions and with high thicknesses.

The best performing material also in terms of recyclability and which can be printed with this technology is polyethylene. Some main differences that characterize rotational molding compared to the blow molding or injection molding process are:
a) the use of polymer powder instead of granules;
b) the molten material is inside a closed mold while in injection molding the material is introduced under pressure inside the mold;
c) the product is removed from the mold theoretically without generating any stress;
d) the wall thicknesses are higher than those obtainable with other molding technologies.

With rotary molding it is also possible to create mold prototypes for experiments at low costs (the production of molds is less expensive than those used with high-pressure molding technologies, such as injection and blow molding). Production is very flexible: objects with recesses or complicated profiles and with good surface definition can be produced, as well as double-layered objects; it is possible to simultaneously print identical or similar products. Furthermore, it is often possible to introduce plastic or metal inserts as integral parts of the product.

It is also possible to print polyethylene obtained from post-consumer polyethylene or clean processing waste. Said recycled polyethylene, in fact, can always be obtained by processing recovered polyethylene, through the thermal extrusion process, in order to obtain a material that is uniform in size and colour. In fact, this last phase returns a product in granules (generally similar to lentils, called pellets) similar in size to that of a virgin polymer and therefore more easily manageable in a production process. Extrusion also provides the opportunity to add additives and/or fillers and/or colorants to the recycled material, which improve its characteristics for the type of applications for which the material is intended. Furthermore, rotomolding technology lends itself well to expressing maximum freedom in the design of the piece. Among the limitations that have not allowed this production technology to establish itself in the manufacture of functional outdoor lamps, there is the impossibility of maintaining low dimensional tolerance values and the impossibility of quickly changing the thickness since a gradual transition is necessary. The average variation in thickness is approximately 5%.

The characteristics of the thermally insulating materials that can be printed by roto-molding, together with the dimensional instability and the difficulty of controlling the internal geometries of the molded piece, typical of the manufacturing process, have always made designers and technicians in the sector give up on manufacturing the frames of the functional lighting fixtures, especially outdoor, with this production technology. In fact, if on the one hand it is possible to create fixing points for screwed connections on the roto-molded product using threaded inserts co-molded to the product itself, on the other hand it is not possible to control the spacing dimensions between said metal inserts due to the effects of dimensional shrinkage caused by volumetric contraction, during and after molding.

In particular, the variable dimensional tolerances of roto-molding, which are not compatible with the dimensional tolerances of the metal mechanical parts to be coupled to the roto-molded pieces, such as the heat sinks obtained by die-casting aluminum render, at the state of the art, the roto-molding technique unsuitable for the production of frames of lighting fixtures integrating both mechanical attachments preferably made of steel and structures containing the light sources, necessarily made using other technology such as die-cast aluminum molding. A blend of plastic pellets and/or flakes (derived from the cold mechanical recycling process), combined with plastic material powder, with a predetermined range of pellet/powder and/or flakes/powder ratio and a predetermined melt flow index, has never been used to produce a hollow cover for rotational molding with mechanical characteristics and technical solutions such that it could constitute, itself, the supporting frame of an outdoor and/or urban lighting fixture.

The aim of the present invention is therefore to create a lighting device whose frame is made of polymeric material capable of overcoming the drawbacks of the known art as highlighted above through the development of new solutions.

Within the scope of this task, an object of the invention is to create a manufacturing system for lighting devices which allows to obtain a better performance of the LED lighting device; the same device is in fact characterized by a self-supporting monocoque frame in roto-molded polymeric material, with integrated mechanical attachment, mechanical reinforcement core and integrated adaptation flange to allow the mechanical coupling, preferably using fixing screws, of an independent hermetic optical group, whose supporting structure is preferably made of die-cast aluminum or thermo-conductive plastic material, removable and universal for the same family of products.

The consequence of the above allows to achieve an important object of the invention which is to obtain a supporting frame and therefore a light fixture, with a weight that is significantly lower than traditional aluminum fixtures made by means of an aluminum die-casting process. This feature allows the use of brackets and/or support poles that are much less robust, and therefore much less expensive, than those relating to lamps that use traditional aluminum frames.

A further purpose of the invention is to create a monocoque frame by rotomolding and therefore by using a single mold. This leads to another advantage which is to prevent impurities and dust of all kinds from nesting in the gap created between the junction areas of the various mechanical components which otherwise constitute the classic frames of LED lighting fixtures manufactured in die-cast aluminum or for plastic injection.

Furthermore, the appliance comprising the object of the present invention is not subjected to degradation due to corrosion phenomena due to exposure to atmospheric agents and solar radiation for the entire lifespan of the LED sources applied to it.

A further purpose of the invention is to make available a construction technique for the manufacturing of covers which has a low environmental impact such as rotomolding. The consequence of the above allows to obtain, compared to the aluminum die casting technology:
- lower material and process costs;
- greater possibilities of obtaining aesthetic finishing;
- longer mold life;
- ,less process waste;
- lower weight of the parts produced;
- ,lower and more widespread costs for the production plant and, therefore, a drastic reduction in the problem of transporting semi-finished products from the foundry to the finishing and assembly plants, helping to reduce a portion of traffic and the pollution resulting from it.

The consequence of the above is to be able to obtain, with respect to both die-casting and plastic injection molding, the manufacture of monocoque frames, with hollow and complex geometries, thicknesses determined at each molding cycle by the quantity of material inserted into the mold, without joints, interstices and free of mechanical tensions since, even with complex shapes, the fibers are not oriented, thus resisting deformations over time.

The consequence of the above allows to achieve another aim of the invention which is to be able to create lighting fixtures with a supporting structure made up of a frame in polymeric material whose thickness can be, for the same mold, increased at will and/or case by case and/or decided product by product. This leads to another advantage which is being able to obtain lighting fixtures whose frame is made of polymeric material, with the highest mechanical resistance expected from current industry standards. Said mechanical resistance allows to achieve a further purpose of the invention which is to be able to create packaging preferably in paper or cardboard, which has much less impact from an environmental point of view compared to those used for lamps whose frame is made of aluminum or by injection plastic.

A further consequence of the above is being able to use molds for the production of the present invention with costs and production times that are significantly lower than those used in aluminum die casting technology and in plastic injection technology to create a component of equal thermomechanical performance.

A further scope of the invention is to use polyolefin mixtures as raw materials, such as polyethylene, which cost significantly less than aluminum alloys or high-performance technopolymers that can be processed through plastic injection molding.

The consequence of the above allows to achieve another object of the invention which is to reduce pollution and, in general, the ecological impact on the environment, thanks to the use of completely recyclable and/or recycled plastics and/or vegetable origin, the lower energy used in the roto-molding process compared to the plastic injection process or the metal alloy die-casting process and the absence of paints and/or chemical pre-treatments.

A further scope of the invention is to be able to use polyethylene flakes coming from the cold mechanical recycling shredding process for the manufacture of the frame of the present invention. Before being introduced into the mold, these flakes are mixed dry with powder of neutral material of fossil and/or vegetable origin and/or recycling.

In particular, the object of the invention is to provide a frame of the aforementioned type which has a flakes/powder mixture ratio within the weight range of about 50% to 90% flakes and about 50% to 10% powder,-with the frame characterized by mechanical characteristics suitable for the intended purpose of use.

The consequence of the above allows to achieve another object of the invention which is to eliminate and/or reduce the losses and waste of plastic material that occur inside and/or outside the production cycle, consequently contributing to creating the so-called closed cycle and/or industrial symbiosis.

This leads to another advantage which is that of not necessarily having to chemically and/or thermally process and/or add recycled plastic flakes, at the same time obtaining a cover surface that presents suggestive pigmented effects without flow or welding lines or aggregations of pigments. The consequence of the above is to obtain a partially translucent cover and this allows to achieve another object of the invention which is to be able to generate chromatic effects, by means of a light source preferably of the RGB type and inside the cover. useful for recreating aesthetic motifs and/or chromatic and/or luminous and/or decorative signals.

Furthermore, the invention also provides a preferably metallic flange and preferably screwed or co-molded into the polymeric material to overcome the problem of dimensional shrinkage of the roto-molded cover in thermoplastic material caused by volumetric contraction, during and after processing (post-shrinkage). The presence of said flange ensures the dimensional stability of the distances between the fixing holes to allow the mechanical connection, preferably by means of screws, of the optical unit, which is thus easily removable. A consequence of the above is being able to repair and/or update and/or regenerate the optical unit and/or upgrade it, thus extending the overall life of the object of the present invention and, at the same time, containing its relative environmental impact, with consequent positive result in terms of environmental footprint assessment.

The consequence of the above is also being able to create a family of products whose self-supporting covers, which differ from each other in design, share the same technical solutions or the same flanges to accommodate the same type of optical unit and the same type of mechanical attachments to fixed support structures and/or mounting brackets. This construction configuration makes it possible to contain the production costs linked to the design and engineering for each new product of the same family by having to manufacture and design only the mold, each time, for the plastic part of the cover only, sharing with the other products of the same family, the same design and/or technical solutions relating to the mechanical attachments and seats for coupling the same optical group. This entails another advantage in terms of economic investments both on the molds and on the stocks to be managed of the optical group frames, having only one type per product family.

This leads to another advantage which is being able to bear certification costs for each product, as required by sector regulations, which are much lower than those foreseen for conventional manufacturing techniques, being able to certify every single product of the same family of products with a moderate economic surplus, starting from the certification obtained for the product with limited air volume conditions, more restrictive than other products of the same family. This is possible since each product of the same family to which the present invention belongs shares the same optical unit, the same construction type and the same electrically insulating construction material for the manufacture of the cover.

The consequence of the above is to be able to produce small series and/or limited series of products with an extremely personalized design at affordable costs and for which the related certification costs with respect to the regulations envisaged for the product covered by this invention are also accessible.

An object of the present invention is to be able to manufacture at low costs, compared to other molding technologies, frames of lighting fixtures with large dimensions compared to those present in the state of the art, and with an internal volume such as to allow the thermal disposal of the heat generated by the light source by means of the convective motions triggered, despite not using construction materials for the frame that are thermally conductive and/or forced air cooling systems. This leads to another advantage which is to prevent the influence of the temperature outside the device itself from significantly compromising the thermal dissipation performance of the optical unit.

The use of the polymer for the construction of the supporting frame of the lighting fixture allows pursuing another aim of the invention which is to be able to integrate within the covers any devices for communicating data or information in real time for all the services of the smart cities. The polymer used, in fact, guarantees transparency to radio waves and therefore the possibility of installing remote control devices including the relevant antennas inside the cover of the lighting device, with advantages from the final aesthetic point of view of the technical solution of the present invention.

A further scope of the invention is to allow the creation of lighting fixtures with a supporting structure made up of a frame in roto-molded polymeric material, while the frame constituting the optical group dedicated to heat dissipation can be preferably made of thermo-conductive thermoplastic compound to replace aluminum. A consequence of the above is to be able to produce the dissipating part, compared to the alloy die casting process metallic, with lower raw material costs, low product tolerances, process costs lower, electrical insulation, greater possibilities of finishing, longer mold life, waste lower process and higher weight of the parts produced contents. A further consequence of the above allows achieving another aim of the invention which is to reduce pollution and, in general, the ecological impact on the environment also for the manufacture of the element dedicated to thermal dissipation, thanks to the use of completely recyclable plastics and the lower energy used in the plastic injection process.

A further purpose of the invention is to allow the creation of lighting fixtures with a supporting structure consisting of a frame made of polymeric material reinforced at the joint and/or attachment points to the support elements, with preferably metallic mechanical elements, in order to guarantee a higher and long-lasting mechanical resistance to external stresses such as gusts of wind and/or mechanical degradation and/or aging due to UV rays: in this way the object of the following invention does not undergo significant structural variations and/or alterations due to the action of atmospheric agents and/or solar radiation for the entire lifespan of the LED sources applied to it.

The following detailed description is given as an illustration and examples of some embodiments of the present invention and is not intended to limit the scope of the claims in any way, the spirit and scope of the present invention being solely limited by the claims set forth below.

The specific terms used in the description and claims have the following meaning:
- MCPCB: **"Metal Core Printed Circuit Board"** which identifies a new type of printed circuit, created to dissipate the considerable heat produced by power LEDs. Characterized by a main core made of aluminum or copper, metals with good thermal conductivity.
- The term co-molding indicates a process which embeds the threaded inserts and/or metal flanges equipped in turn with threaded inserts and/or fixing holes, in the molten plastic material and has the effect of strengthening the mechanical properties of the pieces made of plastic and their ability to be fixed to further mechanical parts, especially in the context of repeated installations.
- The term pole attachment connection indicates a cylindrical metal detail, capable of creating the connection to the lighting fixture in the lower part and in the upper part the connection to support structures such as poles and/or shelves and/or suspended catenaries.
- The term EQUI terminal indicates the electrical connection on board the power driver provided for the electrical connection of the driver itself to the metallic and/or electrically conductive parts constituting the lighting fixture. This connection thus ensures the equipotential connection between electronic circuits and metal masses to increase the immunity of the lighting fixture to electrical overvoltages.
- The term flakes refers to the flakes obtained by shredding and/or grinding plastic materials into small parts, following the selection phase based on the type of polymer, during primary or secondary mechanical recycling.
- The term cover or covering refers to a shell made of thermoplastic material, preferably made by rotomolding, suitable for housing the optical unit using appropriate fastening elements and/or flanges, and any fittings for attachment to the external support structures.
- The Melt Flow Index or Melt Index or Fluidity Index (abbreviated as MFI) is the index of the ease of flow of a molten polymer; its measurement is carried out by loading the molten polymer at a certain temperature into a heated cylinder to which a small cylinder (diameter 2.095 mm and length 8 mm) is fixed, which exerts a constant force and makes the polymer flow through a capillary; the mass (expressed in grams) of polymer released in 10 minutes corresponds to the value of the Melt Flow Index.
   The greater the mass of leaked material, the greater the Melt Flow Index and the lower the viscosity of the polymer. The operating temperature and the mass of the cylinder are set by the standards depending on the type of material you want to test.

### SHORT DESCRIPTION OF THE FIGURES

The present invention is, therefore, now described, by way of illustration but not of limitation, according to its preferred but not exclusive embodiments, with particular reference to the figures of the attached drawings, wherein:
- figure **(1a****)** illustrates an external side view of a possible embodiment of an apparatus comprising the object of the present invention;
- figure **(1b****)** illustrates an external view from below of a possible embodiment of an apparatus comprising the object of the present invention;
- the **figures (1c**, 1d) illustrate perspective views of a possible embodiment of an apparatus comprising the object of the present invention;
- the **figures (2a, 2b, 2c****,)** illustrate overall external views of a possible embodiment of the frame of an apparatus comprising the present invention;
- figure **(2d****)** represents a cross section of the frame of an apparatus comprising the present invention;
- figure **(2e****)** represents the detail of the cross section of the seat of the anti-condensation valve of the frame of an apparatus comprising the present invention;
- figure **(2f****)** represents the exploded sectional view of the frame of an apparatus comprising the present invention;
- the **figures (2g**, 2h) represent sectional views of the detail relating to the coupling by co-molding between the cover and the coupling flange;
- figure (3a.1) represents a trimetric view of the co-molding coupling flange of an apparatus comprising the present invention;
- figure (3a.2) represents a trimetric view of the coupling flange for mechanical fixing to the cover of an apparatus comprising the present invention;
- figure (3a.3) represents an exploded view relating to the coupling of the coupling flange for mechanical fixing to the cover of an apparatus comprising the present invention;
- figure (3a.4) represents a trimetric view of the cover complete with coupling flange for mechanical fixing;
- figure **(3b****)** represents the plan view of the coupling flange for co-molding;
- figure **(3c****)** represents the cross section of the flange in **figure (3b****);**
- **figures (3e**, 3f) represent the details of the cross section of the coupling flange for co-molding;
- figure **(4d****)** represents a trimetric view of the pole connection fitting suitable for co-molding on plastic materials;
- the **figures (4a**, 4b) represent the exploded sectional views of the co-molding coupling of the pole attachment connection to the cover of the present invention;
- figure **(4c****)** represents a sectional view of the pole connection co-molded with the cover of the present invention;
- figures **(5a**, 5b) represent the views relating to the installation configuration of an apparatus comprising the object of the present invention with respect to an external mechanical support element;
- figure **(5c****)** illustrates the suspended application of an apparatus comprising the object of the present invention with respect to a pole equipped with an arm;
- figure **(5d****)** illustrates the exploded section relating to the threaded coupling between an apparatus comprising the object of the present invention and the support arm;
- figure **(5e****)** represents a side view of the object of an apparatus comprising the object the present invention complete with relative attachment for steel cable for installation on a tensioned line;
- Figure **(6****)** is a generally schematic, partial and enlarged sectional illustration, referring to detail 1 of **Figure (7),** of a generally uniform mixture of flakes and powder inserted into a mold, showing the powder filling the interstices between the flakes;
- figure **(7****)** is a schematic illustration of a feeding system that uniformly mixes flakes and powder in a mold;
- figure **(8****)** is a partial sectional view of one of the molds installed on a rotomolding machine, with the mold closed and with a cover molded inside it;
- Figure **(9****)** is a partial, enlarged illustration of a section of **Figure (8****)** and of a hollow molded cover produced in the rotational molding process;
- figure **(10****)** is a trimetric view of a cover produced according to the invention;
- figure **(11****)** is a section of the wall of the cover of **figure (10****)** with reference to the section line 6-6 of **figure (10****)** .

### DETAILED DESCRIPTION OF THE FIGURES

In **figure (1c****),** it can be seen the specific fundamental elements characteristic of the present invention **(0)** which are, first of all, the **cover (1)** made of polymeric material and preferably by rotomolding, connected both to the **pole connection fitting (3),** better detailed in the **figures (4d)** and both the **optical unit (2).**

The **figures (2a, 2b, 2c****)** illustrate overall external views of a possible realization of the frame of the present invention in which the **cover (1)** can be distinguished, to which the **pole connection fitting (3)** is applied, better detailed in the **figures (4c**, 4d). In the **figures (2b, 2c, 2d, 2e****)** the **threaded insert (40)** and the **coupling flange (38)** are visible, better described in figure (3a.1). Said **threaded insert (40)** has the purpose of forming the seat for the **anti-condensation valve (37).** Said **anti-condensation valve (37)** has the purpose of quickly equalizing the pressure inside the hermetic compartment created between the **optical unit (2)** and the **complete frame (21c)** equipped with the **cable gland (36)** preventing the formation of condensation in said compartment and at the same time the entry of water and contaminants.

In the **figure (2d****) is shown** the cross-sectional view of the **frame (21)** in which the co-molding coupling with the **cover (1),** the **threaded insert (40),** the **pole attachment fitting (3)** and the **coupling flange (38).**

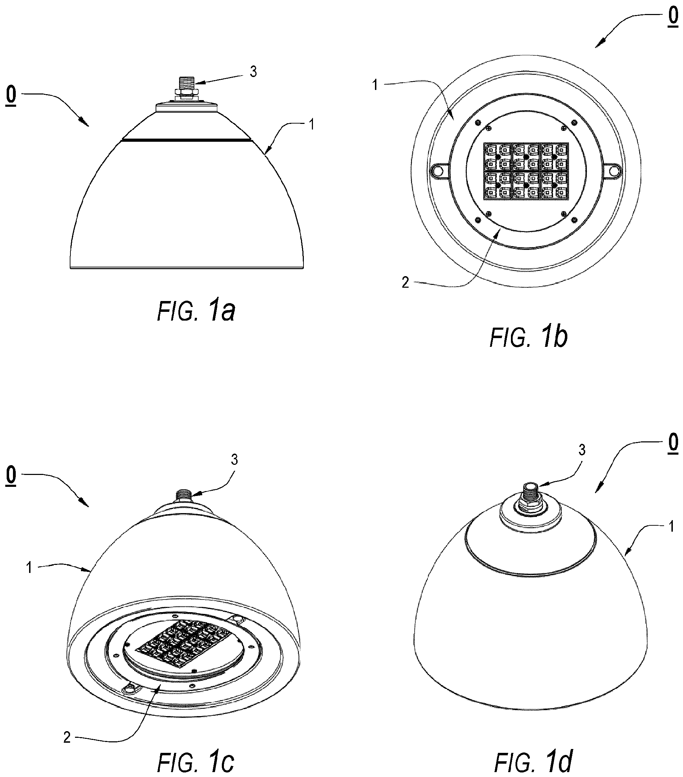

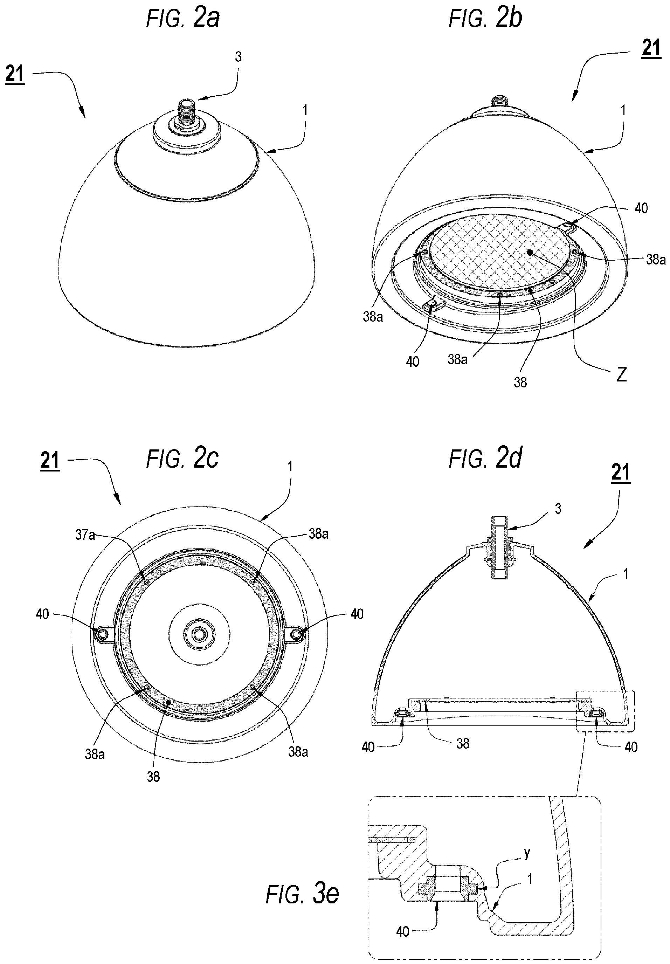

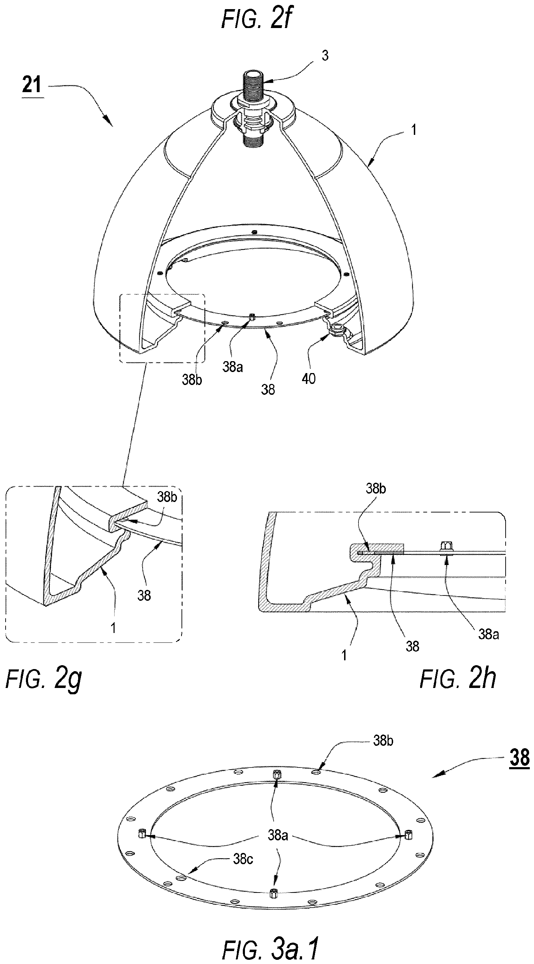

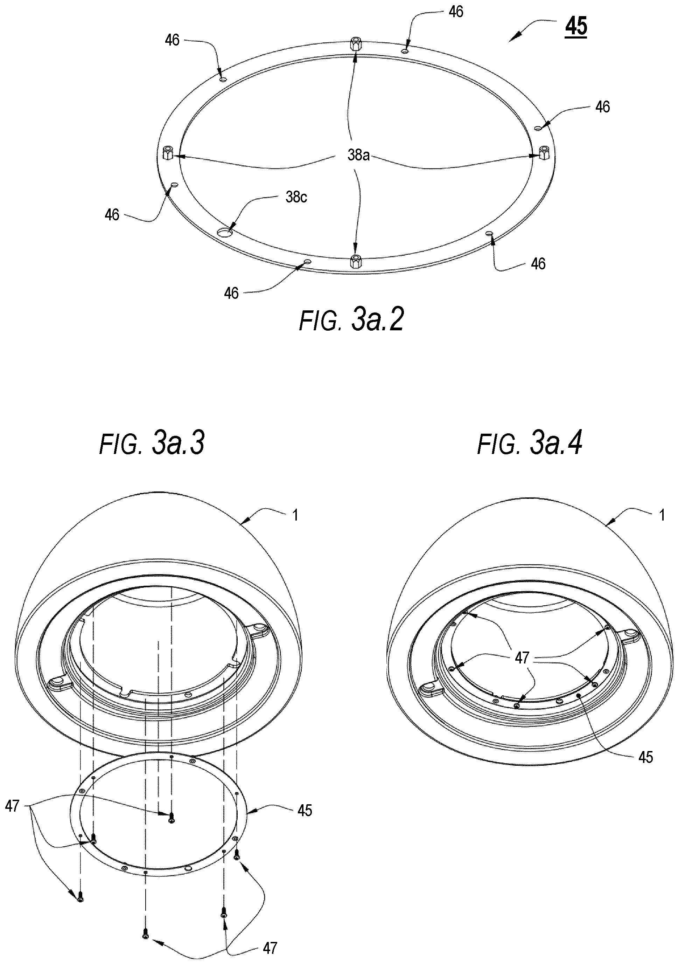

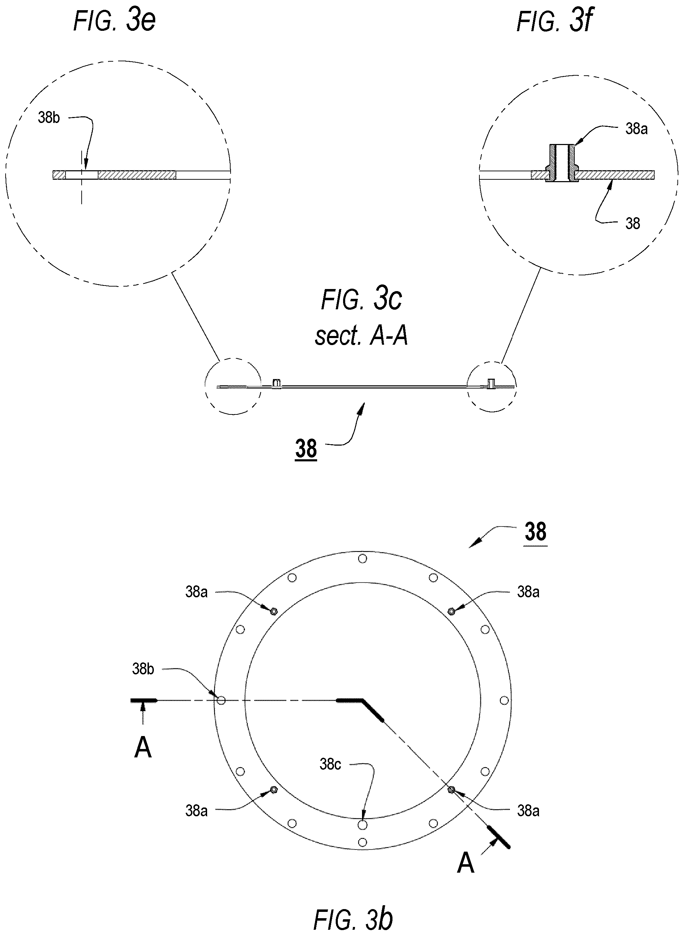

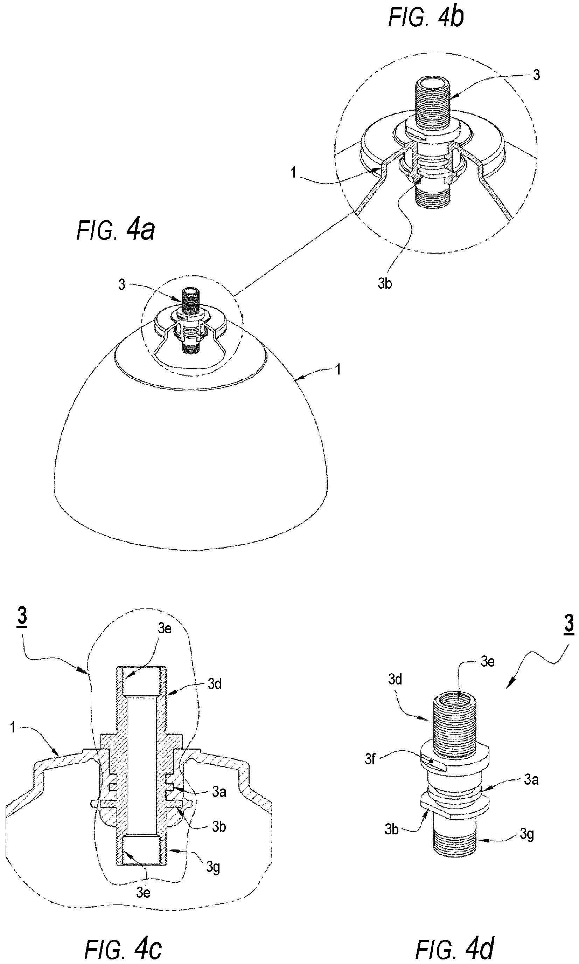

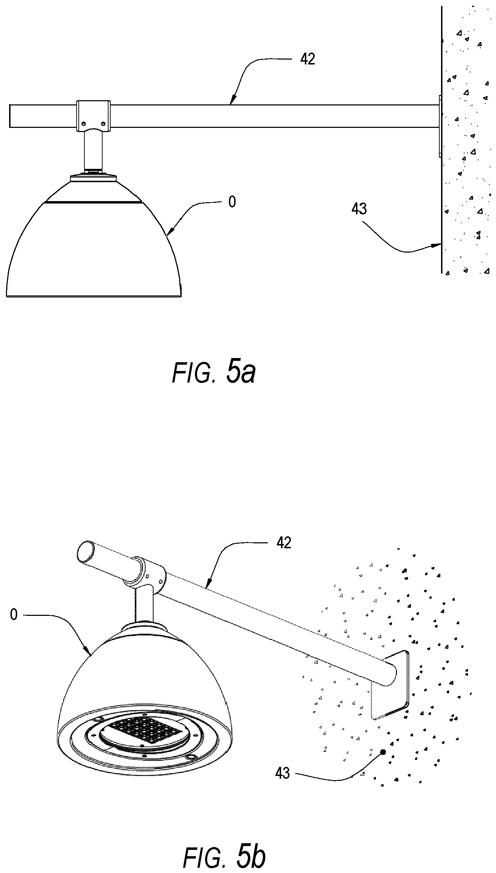

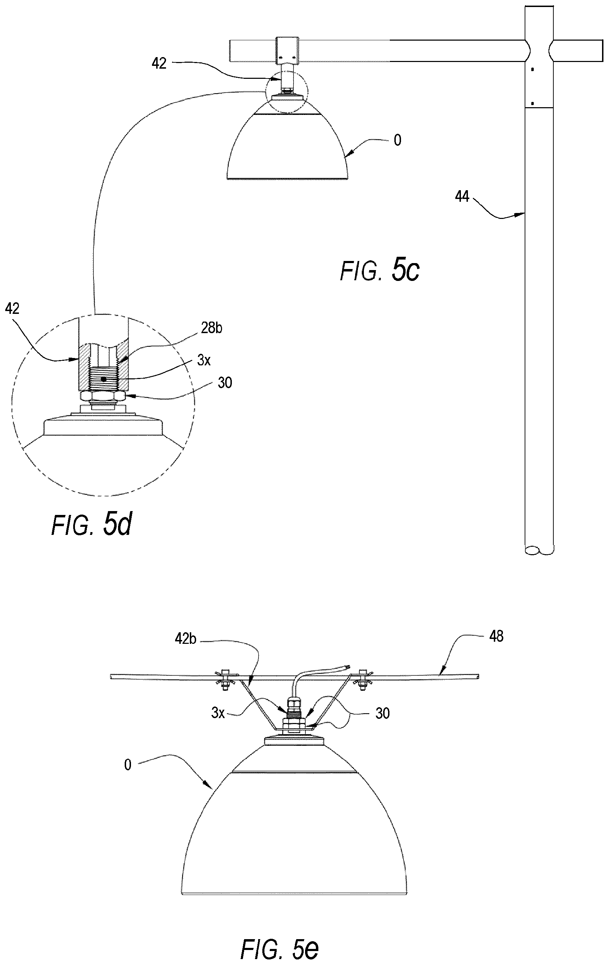

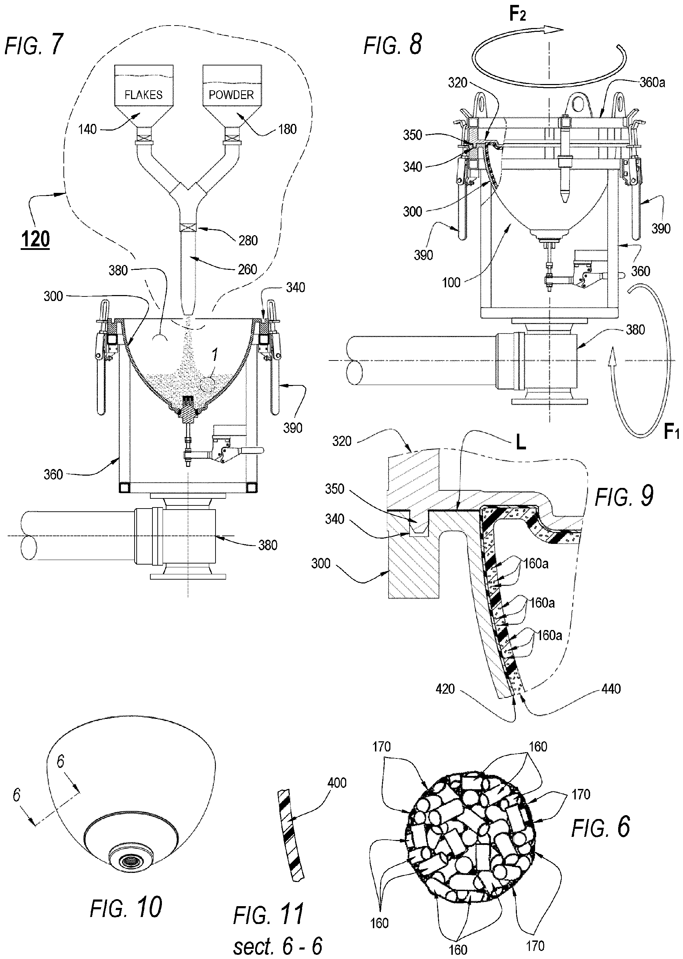

Figure **(2e****)** represents the detail of the cross section of the **threaded insert (40),** co-molded to the **cover (1).** In **figure (2e****)** they are also visible the **projections (y),** with anti-rotation geometry (not shown in the figure), supplied with the **threaded insert (40),** whose scope is to facilitate the passage of the molten polymer in the molding phase of the **cover (1),** for being able to secure the **threaded insert (40)** to the **cover (1)** in a stable and long-lasting manner during the post-molding cooling phase.

Figure **(2f****)** represents an expoded sectional view of the frame of the present invention in which the **coupling flange (38),** the **threaded insert (40),** the **pole connection fitting (3)** are visible, all co-molded with the **cover (1).**

The **figures (2d**, 2h) represent sectional views of the detail relating to the co-molding coupling between **the cover (1)** and **the coupling flange (38)** in which the **embedding holes (38b)** obtained on the **coupling flange (38)** are visible. The scope of said **embedding holes (38b)** is to facilitate the passage of the molten polymer in the molding phase of the cover **(1)** in order to be able to ensure, in the post-molding cooling phase, in a stable and long -lasting manner, the **coupling (38)** to the **cover (1).** In **figure (2h****)** one of the **metal inserts (38a)** is also visible, better detailed in **figure (4f),** obtained on the **coupling flange** (38). The **metal inserts (38a)** are designed to accommodate the **screws (20),** suitable for making the mechanical connection of the **optical unit (2)** to the **frame (21).**

Figure (3a.1) represents a trimetric view of the coupling flange (38) in which the embedding holes (38b), the centering and/or abutment hole (38c), and the threaded inserts (38a) are visible. In an alternative embodiment, said embedding holes (38b) can be replaced by fixing holes (46) whose shape is suitable to allow the fixing of the coupling flange on the cover (1) by means of a screwed connection, preferably using self-tapping screws (47), as described in figures (3a.3) and (3a.4).

Figure (3a.2) represents a trimetric view of the coupling flange for mechanical fixing (45) in which the fixing holes (46), the centering and/or abutment hole (38c), the threaded inserts (38a) are visible.

Figure (3a.3) represents an exploded view relating to the coupling of the **coupling flange for mechanical fixing (45)** to the **cover (1),** preferably by means of the **self-tapping screws (47)** introduced through the **fixing holes (46)** present on the **coupling flange for mechanical fixing (45)** and screwed onto the **cover (1).**

The **figures (3b, 3c**, 4e, 4f) represent the cross section of the **coupling flange (38)** in which the details of the **embedding hole (38b)** and the **insert are visible metallic (38a) .**

Figure **(4d****)** represents a trimetric view of the **pole connection fitting (3)** for co-molding in which the **anti-extraction projection (3a)** and the **anti-rotation projection (3b)** are visible. The scope of said **projections (3a)** and **(3b)** is to facilitate the passage of the molten polymer in the molding phase of the **cover (1)** in order to ensure, in the post-molding cooling phase, the connection in a stable and long-lasting manner of the **pole connection fitting (3)** to the **cover (1).** In particular, the geometry of the **anti-rotation projection -3b** is characterized by 2 rectilinear recesses with respect to the circular perimeter with the aim of hindering, in contrast to the polymer constituting its seat, any movement, both rotational and transversal. Alternatively to the **pole connection fitting (3),** coupled to the **cover (1)** for co-molding, it is possible, according to the present invention, to use the **pole connection fitting for screwing (3x),** and fixed to the **cover ( 1)** by screwing it into the **thread (41)** obtained on the **cover (1).**

The pole connection fitting for screwing (3x) and the pole connection fitting (3) share the geometry of the thread (3d) and the thread (3g) better described in the figure (4d) and the threaded seats (3e), better detailed in figure (4c).

In **figure (4d****)** the **thread (3d)** is also visible, which is also in common to the **pole connection fitting (3x)**, intended for the screwed coupling of the **pole connection fitting (3)** to an external mechanical support element, such as a shelf, better detailed in **figure (5b****),** or to an **interface bracket (42b)**, as detailed in **figure (5e****).** A **nut (30)** is also screwed onto the **thread (3d)** to lock the orientation of the **lighting device (0)** which is the subject of the present invention. The function of said **nut (30),** once tightened compared to the threaded seat of the **external mechanical support (42),** as detailed in **figure (5d****),** or with respect to an **interface bracket (42b)**, as detailed in **figure (5e****),** is to prevent any relative rotation between **the appliance (0)** and the **external mechanical support (42)** or alternatively with respect to the **interface bracket (42b).**

In **figure (4d****)** the **thread (3g)** is also visible, which is also in common to the **pole connection fitting (3x)**, intended for coupling the **spring disk (32),** to the **cover (1)** by means of one or more **fixing ring nuts (35),.** Said **fixing ring (35),** once tightened with respect to the **spring disk (32),** forces the **flexible fins (32a)** of the **spring disk (32)**to conform to the internal geometry of the **cover (1).** In this way the **disc springs (32),** improves the effectiveness of the support offered by the **pole connection fitting (3)** or, alternatively, from the **pole connection fitting (3x)**, allowing to reduce the deformation of the **cover (1)** and, therefore, its compliance under the action of the pressure of the wind and its own weight. Furthermore, the **spring disk** (32) helps to better distribute the state of stress in the area close to the constraint represented by the **pole connection fitting (3)** or, alternatively, from the **pole connection fitting (3x),** thus improving the overall mechanical behavior of the **lamp (0).**

The action of the **spring disk (32)** therefore allows reaching a good compromise between resistance and weight of the **device (0),** with a view to reducing the quantity of polymeric material used in the manufacture of the **cover (1).**

In **figure (4d****)** the pair of **transversal grooves (3f)** are also visible, useful for fixing the **device (0)** to an **external mechanical support (42),** better represented in **figure (5d).**

Figures **(4a**, 4b) represent the split section views of the co-molding coupling of the **pole connection (3)** in which the detail of the **anti-rotation projection (3b)** is visible.

Figure **(4c****)** represents a sectional view of the **pole connection fitting (3)** molded with the **cover (1)** in which the **threaded seats (3e) are visible,** also common to the **pole connection fitting (3x)**, suitable for hosting a suitable **cable gland element (36),** better detailed in figure (10c).

The action of the **spring disk (32)** therefore allows reaching a good compromise between resistance and weight of the **device (0),** with a view to reducing the quantity of polymeric material used in the manufacture of the **cover (1).**

**Figures (5a, 5b****,** **5c****)** represent the views relating to the installation configuration of the object of the present invention in which the **pole attachment connection (3x)** or **(3)** which engages the **seat (28b)** present on the **wall shelf is visible (42)** fixed on the **wall (43)** or on an **external pole (44).**

**Figure (5e****)** represents the side view relating to the installation configuration of the object of the present invention in which the **interface bracket (42b)** is visible, represented by an attachment for **steel cable (48)** for installation on a stretcher, fixed to the **pole connection fitting (3x),** or alternatively to the **pole connection fitting (3),** preferably using two **mechanical nuts (30).**

In a preferred embodiment the **cover (1)** is made of thermoplastic polymeric material and as such lends itself to being shaped using the rotational molding technique. The starting material can be composed, in a percentage up to 100%, by polyethylene in powder form (lower percentages are common in case of blends as described in the followings), a polymer that is becoming popular in recent times for its mechanical properties and high recyclability. This material is, in fact, 100% recyclable and highly resistant to abrasion, wear, chemical agents and impacts. Polyethylene powder can be obtained from the pulverization of extruded pellets with appropriate additives starting from virgin and/or recycled material. The virgin material can be of fossil origin or preferably of plant origin, where the ethylene used is of renewable origin, specifically from sugar cane. The additive process is useful in order to increase and/or improve the mechanical performance of the polymer resulting from the extrusion process and/or its immunity to degradation by ultraviolet rays.

Alternatively or in combination with polyethylene it is possible to use generic synthetic and/or vegetable thermoplastic materials, in the form of flakes and/or powders as also described below.

The optimal dust particle has a size of approximately 300 um. In resins selected for rotational molding it is necessary to consider the apparent viscosity of the melt at low speeds. A polymer with a relatively low viscosity (high MFR) allows good surface reproduction even with large particles.

In an alternative embodiment, it has been demonstrated that it is possible to create the **cover (1)** by using powdered polymer, according to any type described above, mixed dry with recyclable polyolefin flakes, hereinafter referred to as flakes.

The recycled polyethylene flakes come from homogeneous mechanical recycling, and specifically are the result of fine grinding downstream of the grinding, washing and separation processes by type of material and color. Recycled polyethylene flakes can also be available in a selection of colors such as light blue, dark blue, green and clear.

The size of said flakes generally does not exceed 5 mm in length in both dimensions, while the thickness is generally equal to 1 mm. they are available, in a maximum quantity of 10%, flakes whose dimensions are, in both directions, up to 10 mm and thicknesses of 2 mm.

The main sources of these materials are the so-called "clean plastic waste" obtained from municipal, residential or industrial waste. Because these materials have been exposed, often for long periods, to the environment, they have markedly different physical and chemical properties than virgin material. In general, waste plastic has substantially lower tensile strength and poor flexural and thermal properties than virgin plastic. The selection of recycled materials can also contain, preferably up to a maximum of 15%, smaller quantities of one or more polymeric materials, also derived from recyclable waste, such as PVC (rigid or flexible), chlorosulphonated polyethylene, compounded (reinforced) and modified, unmodified or compounded polypropylene (modified-reinforced, alloy, blends) engineering plastics such as polyamides, polycarbonates, thermoplastic polyesters (PET PBT), ABS, polyphenylene oxide and polyacetals.

Referring now again to the drawings, in **figure (7****)** a mixture of plastic flakes and powder is loaded into a **mold (100),** by a feeding system **(120).**

The **feeding system (120)** in **figure (7****),** in the illustrated embodiment, includes a **hopper (140)** capable of receiving inside it a supply of **synthetic and/or vegetable and/or recycled plastic flakes (160),** detailed in **figure (6****),** and a **hopper (180)** capable of receiving inside it a supply of **synthetic and/or vegetable thermoplastic powder (170),** detailed in **figure (6****).**

The flakes and the powder mix together and then this mixture can pass through the preferably flexible **feeding tube (260),** in the **lower part (300) of** the **mold (100),** visible in **figure (7****).** The **mold (100)** in closed configuration is better visible in **figure (8****).**

A **valve (280)** can also be provided, which intercepts the **feeding tube (260),** in order to selectively control the emission of the mixture of flakes and dust coming from the **hoppers (140)** and **(180).** Alternatively, the **flakes (160)** and the **powder (170)** can be mixed together by means of a dry mixing system of the rotational type not illustrated but known to those skilled in the art.

The **flakes (160)** and the **powder (170)** of **figure (6****),** according to the present invention, are present with the flakes-powder mixture ratio, included in the weight range from approximately 50% to 90% of flakes, and consequently approximately 50% to 10% dust together with any impurities which contribute to forming the total of said mixture.

The molds can usually be made of aluminum worked by casting or hollowed out with numerically controlled machines (CNC).

The mold is generally made in two **hollow parts (300)** and **(320),** as shown in **figure (8****):** the **lower hollow part (300)** of the **cover mold (1),** as highlighted in **figure (9****),** is equipped of **centering holes (340)** in correspondence with the **dividing line (L).** The **upper hollow part (320)** of the mold is equipped with **centering pins (350),** as highlighted in **figure (9****),** to obtain the correct alignment of the two parts and minimize aesthetic surface imperfections in correspondence with the **dividing line (L).**

The molds are preferably internally coated so as to prevent the thermoplastic synthetic material inserted into the mold cavity from adhering to the metal of the mold during the molding process. This coating can be a permanent coating such as, for example, "Teflon" (polytetrafluoroethylene) or a non-stick coating, known to those skilled in the art, which must be renewed from time to time.

In actual production it is preferably provided that the mold cavities are mounted on a conventional **reticular metal structure (360)** and **(360a)** of **figure (8****)** called the mold holder frame. A **frame (360),** mounted on an **arm (380)** of a rotational molding machine, carries the **lower mold section (300)** of the **cover mold (1).** An **upper frame (360a)** hinged or in any case removable with respect to the lower frame, carries the **upper section (320)** of the **cover mold (1).**

The two frames with the relevant mold sections mounted on them, and the conventional bolts and/or **lever fasteners (390)** to fasten the **upper frame (320) together** with the **lower one (300),** constitute a complete structure with openable mold and closable as is known in the rotational molding technique.

The **flakes (160)** can generally have almost any shape configuration both in cross and in plan section, and in **figure (6****)** they are conventionally represented as small cylinders without excluding other forms such as flakes or chips.

The mixture ratio of flakes and powder inserted into the mold is preferably arranged such that the amount of powder in the mixture is essentially just enough to fill the voids between the flakes. The volume of flakes and powder mixture thus occupies essentially the same volume as the flakes before adding the powder. The ratio between the quantities must be determined from time to time according to known techniques or through the supervision of an operator who carries out a preliminary determination based on the size of the flakes by making the powder flow in the gaps until the filling requirement mentioned above has been satisfied. With the flakes dimensions already mentioned, i.e. 5x5x2 mm, the powder content was determined to be from 30% to 50% while that of the flakes from 70% to 50%.

The process of the invention can be carried out as described below.

Starting from an empty open mold, a charge of a predetermined weight or volume of a mixture of flakes and powder is introduced into the **lower half (300)** of each **cavity (380)** of the mold assembly, as illustrated in **figure (7****).** The amount of the charge is determined based on the surface of the mold, the final thickness expected for the walls of the **cover (1)** and the density of the polymer used. This quantity of mixture introduced is preferably calculated to give an average thickness of the melted polymer of the **cover (1)** preferably equal to 5 mm.

The **upper frame (360a),** visible in **the** **figure (8****),** containing the **upper part (320) of the mold (100),** is then lowered until the **holes** and **coupling pins (340)** and **(350),** better detailed in **the** **figure (9****),** encounter each other and conventional lock bolts (not shown) and/or **latches (390),** on the mold holder frame **(360)** and **(360a),** are tightened, as visible in **figure (8****).**

The mold is then placed or moved into an oven in the conventional manner, with the oven most commonly heated with hot air, circulated at a relatively high speed.

The rotational molding machine upon which one or more **molds (100)** complete with relative **frames (360)** and **(360a)** are conventionally mounted, can be equipped with one or more arms, each of which rotates around two mutually perpendicular axes. The resulting compound movement of rotation around the two axes, in the direction of the arrows **(F₁)** and **(F₂)** of **figure (8****),** exposes all the internal portions of the **mold cavities (100)** to the charge of flakes and powder.

During the heating phase (time spent in the oven), firstly the part of the powder in contact with the internal surface of the **mold (100)** melts, forming a porous film on the internal surface of the same. Rotation and heating of the molds are continued until all the flakes and powder have dissolved into a generally homogeneous mass and have formed a **generally uniform layer of molten plastic,** for example **(400)** of **figure (11****),** against the internal surface of the mold walls. By continuing to rotate, the **mold (100)** is subsequently positioned in the cooling zone. Cooling occurs by forced ventilation or water jets or a combination of both. When the mold is cold, it is placed in the work area to be opened. After extraction of the product, the mold is loaded for a subsequent cycle.

Depending on the melt index of the material used, cooling must be maintained until the molded object has sufficient strength to resist the deformation that tends to occur when opening molds and removing formed articles.

The fully cooled molds may then be moved or otherwise removed from the cooling section of the molding machine and placed in a workstation, where the molds may be opened upon loosening of the aforementioned bolts and/or **lever fasteners (390)** and the **covers (1)** removed.

In the embodiment described here, to create the **cover (1)** it is necessary to stay in the oven for approximately 15÷20 minutes at a temperature of 200 °C to 300 °C. The higher the temperature of the oven chamber and/or the longer the mold is allowed to remain at the high temperature, the more the flakes and powder fuse together.

Rotational molding, in general, is a process in which the heat exchange does not occur in stationary conditions. The mold temperature does not reach an equilibrium value but continues to increase and decrease during the cycle. The temperature of the plastic material, located inside the mold, also continues to change. In the particular case of the product object of the present invention, in which the wall thicknesses can be included in the range from 4 to 8 mm, we can consider an oven temperature ranging from 250 °C to 300 °C, with a residence time in the oven ranging from 10 to 25 minutes. The time spent in the oven and consequently the quality of the piece are also influenced by:
- The temperature of the mold when it enters the oven;
- Environmental humidity.

The mixing of flakes and powder is instead favored by the rotation around two axes, perpendicular to each other, of the mold.

The rotation ratio depends on the shape of the item to be molded and the position in which the mold is mounted on the rotation arm.

The cooling started with a spray of cold water followed by air cooling from special fans, is set for a time such as to reduce the temperature of the **mold (100)** in a range of values ranging from approximately 21 °C to approximately 30 °C at the outlet of the cooling section.

It will be understood however that the exact heating or cooling times and temperatures depend primarily on the range of materials, products and types of manufacturing machinery that are used depending on the process. Variables such as the melting rate of the powders and granules, the material and thickness of the mold cavity, and the temperature and speed of the heating and cooling media all contribute to determining how long each mold must remain in the heating sections and cooling. It is relatively easy to find the correct time and temperature to properly heat and cool molds on any type of rotational molding equipment. The results observed during some experimental cycles, in which the various parameters are altered, will show when the mixture of flakes and powders supplied according to this invention has merged into a **homogeneous layer (400)** as shown in **figure (11****),** without signs of degradation and voids in the cover. Cooling conditions can be easily adjusted to allow rotomolded items to be removed from mold cavities without deformation.

In **figure (9****),** instead, another embodiment of the **cover (1)** is illustrated, wherein the heating time and the temperature of the process are regulated so that the flakes and powder do not merge into one layer generally homogeneous. In this configuration the flakes are in a semi-viscous state, so that the flakes and powder particles do not flow in a homogeneous layer during the rotation of the mold. This ensures that the flakes do not totally lose their individuality but instead retain at least in part their particle characteristics, even if fused together into a generally uniform wall thickness for the **cover (1).**

At the beginning of the molding process the powder and flakes are in the form of granules free to move freely inside the mold. When rotation begins, thermal energy is transferred through the mold to the mass of material and internal air. As long as the mold and the plastic material are not yet sufficiently hot, only a very thin layer of dust forms due to electrostatic attraction. Subsequently, by continuing the baking process in the oven, the particles of plastic material have reached a temperature such that they begin to melt starting from the surface layer, becoming sticky. The reference temperature is that of adhesion of the material, which in the specific case of polyethylene ranges from 110°C to 120°C.

When the powder particles begin to adhere, starting from the points on the mold surface that have a higher temperature, a layer of polymer is formed which acts as an insulator. In this way the areas on which the material has not yet taken hold because they are colder have the possibility of increasing in temperature.

Thanks to progressive heating, the melting phase is reached where the powder first melts, at a melting temperature ranging from 125°C to 135, forming an increasingly homogeneous mass and incorporating the partially melted flakes. During the melting phase, therefore, a natural separation of the material particles takes place depending on their size: the smaller particles adhere first, followed by progressively larger particles.

The partial maintenance of the particle configuration of the flakes translates into a wall for the **cover (1)** characterized by a **generally thin layer of substantially uniform thickness (420)** of melted homogeneous plastic and a **relatively thicker layer (440)** of particulate melted plastic. The **homogeneous layer (420)** on the formed article provides a uniform type effect that follows the geometry and roughness of the **internal wall (380)** of the **mold (100),** on the outside of the **cover (1)** with the **partially melted and melted flakes (160a)** visible through the filler represented by the molten powder, to give a notable depth effect. This result is particularly notable for generally translucent **cover colors (1).** Furthermore, the partial maintenance of the particle configuration of the **flakes (160)** also translates into an increase in performance from the point of view of mechanical resistance to impacts and scratches, compared to the case in which the polymer used in the formation of the **cover (1)** is made exclusively from **dust (170).**

In a preferred embodiment, the **powder (170)** is obtained from polyethylene mixed with appropriate compounds rich in additives to add further protection to the base polymer against UV rays, responsible for the degradation of the plastic material. The consequence of the above is that the **homogeneous layer of molten powder (420)** of **figure (9****),** will give the outermost surface layer of the **molded article (1),** the protection necessary to resist UV rays which can have a strong impact both on the aesthetic aspect and on the physical-chemical and mechanical properties of the materials constituting the **cover (1)** of the present invention.

Molding experiments were carried out by the applicant verifying that, for each polymer composition mentioned above, it is possible to integrate the annexation during the molding of the **cover (1),** of preferably metallic pieces such as the **pole connection fitting (3)** and/or the **flange connection (38)** and/or one or more **threaded metal inserts (40)** shown in **figure (2f****).**

With reference to the formulations according to any of the variants described, laboratory experiments conducted on accelerated aging according to the ISO 4892-3 (2016) standard have highlighted how the FT-IR infrared spectra do not show, compared to the sample obtained from the cover (1) detected at time 0, significant variations up to 1200 hours of exposure. At 1600 hours of aging, absorption begins to be noticed on the thin film due to the beginning of oxidation, especially in the area of absorption due to any oxidized groups.

Molding experiments have been carried out by the applicant verifying that with the compositions in the aforementioned percentages of flakes and powder, the walls of the molded cover can be kept sufficiently thick and sufficient plastic material can be inserted into each mold, so that the formed article has of the mechanical characteristics corresponding to the highest degree of impact resistance required by sector regulations. It has been found that the **powder (170)** should preferably have a fluidity index MFI (190 °C / 2.16kg), calculated according to the ISO 1133 standard, between 3 and 5 g/10min.

According to one embodiment, it is possible to shield the **mold (100)** by means of inserts in thermally insulating material in the area of the **cover (1)** intended to house the bulk of the **optical unit (2), area (Z)** of **figure (2b****),** foreseen in order to prevent unnecessary storage and consequent waste of plastic material in those areas and subsequent mechanical operations to remove it.

It has thus been shown that the LED lighting fixture with a frame made of polymeric material and a removable light source, with high mechanical resistance and low environmental impact, described according to the present invention, achieves the intended purposes and tasks, solving the problems of the prior art.

Numerous modifications can be made by those skilled in the art without departing from the scope of protection of the present invention. The scope of the claims, therefore, must not be limited by the illustrations or preferred embodiments shown in the exemplary description, but rather the claims must include all patentable novelty features deducible from the present invention, including all characteristics that would be treated as equivalent by those skilled in the art.

## Claims

1. Cover (1) for an LED lighting apparatus, which LED lighting apparatus includes said cover (1) and an optical assembly (2),
wherein said cover (1) is made of polymeric material by means of a rotary molding process,
said cover (1) being **characterized by** the fact of being obtained by rotational molding from a mixture of thermoplastic flakes and powder mixed in a known proportion and with a fluidity index (MFI) in the range from 3 to 5 g/10 min.

2. Cover according to claim 1 wherein said proportion between thermoplastic flakes and powder is such that the ratio of flakes and powder is chosen so that the quantity of powder is limited to the quantity necessary to fill all the voids between the flakes, so that the volume of the flakes and powder mixture is substantially the same as the volume occupied by the flakes alone before the addition of the powder.

3. Cover according to claim 2 wherein powder content ranges from 30% to 50% by weight while that of flakes ranges from 70% to 50% by weight.

4. Cover according to claim 1 wherein said proportion between thermoplastic flakes and powder is such that the flakes/powder mixture ratio is included within the weight range of about 50% to 90% of flakes and about 50% to 10% powder, preferably a mixture ratio of flakes and powder is in the range of about 60% to 80% by weight flakes and 40% to 20% by weight powder.

5. Cover according to one or more of the preceding claims, **characterized in that** it is molded at a temperature which causes the melting and mixing of the mixture of flakes and powder together to form a generally homogeneous layer against the internal wall of the mold cavity, preferably at an oven temperature ranging from 250°C to 300°C.

6. Cover according to claim 5, wherein the molding takes place with a permanence time in the oven ranging from 10 to 25 minutes.

7. Cover according to one or more of the previous claims 1 to 6, wherein the powder (170) is obtained as a mixture of PE and compounds containing anti-UV additives.

8. Process for the manufacturing of a cover (1) according to one or more of the previous claims by roto-molding by means of a roto-molding plant, in which predetermined quantities of flakes and powders are dosed using separate dosers, after which the flows of flakes and powders are melted together before or just upon entering a rotational mold (100) of the said plant.

9. Process according to the previous claim in which said mold is heated in an oven of said plant, which oven is maintained at a temperature in the range from about 200°C to 300°C for a predetermined time sufficient to melting and mixing the flakes and powder together to form a uniform homogeneous layer against the inner wall of the mold cavity (100), and then subsequently being cooled while the mold is in rotation until the mold (100) can be opened and the cover (1) can be removed without deformation

10. Process according to one or more of the previous claims 8 or 9, comprising a pre-heating step, preceding the heating step, in which the oven is heated to a temperature and for a time such that the flakes and the powder are brought to a semi-viscous state, so that the flakes and powder particles do not flow in a homogeneous layer during the rotation of the mold, and at the same time the flakes do not totally lose their individuality but instead retain at least partly their particle characteristics, even if fused together in a generally uniform wall thickness.

11. Cover according to claim 10, wherein the flakes and powders material comprises at least 85% polyethylene and the oven temperature is in the range from 110°C to 120°C.

12. Process according to one or more of the previous process claims wherein said rotation of the mold is continuous during heating and/or cooling of the mold itself.

13. LED lighting apparatus comprising:
- an optical unit (2);
- a cover (1) according to one or more of the preceding claims in which a coupling flange (38) is integrated,
**characterized by** the fact that the said optical group (2) is removably fixed to the said coupling flange (38) and said cover (1) is made of polymeric material with a rotary molding process in accordance with the previous process claims.

14. Apparatus according to claim 13, wherein the coupling flange (38) is coupled to the cover (1) by co-molding.

15. Apparatus according to claim 13 wherein the mating flange (38) is **characterized by** one or more embedding holes (38b) through which extend bridges of polymer material between them the polymer material on two opposite sides of said flange thanks to the passage through them of the molten polymer in the co-molding phase of the cover (1) to be able to form retainers and ensure, in the post-molding cooling phase, in a stable and long-lasting manner, the coupling flange (38) to the cover (1).
